# EUROPEAN PATENT APPLICATION

(11) **EP 0 999 672 A2**
(43) Date of publication of application: **10.05.2000**
(21) Application number: 99308857.4
(22) Date of filing: 08.11.1999
(51) Int. Cl.: H04L 12/28, H04L 29/06, H04L 12/66, H04Q 7/22

(54) **System and method for mapping packet data functional entities to elements in a communications network**

(30) Priority: 06.11.1998 US 107499 P; 29.07.1999 US 363418
(71) Applicant: NORTEL NETWORKS CORPORATION, Montreal, Quebec H2Y 3Y4 (CA)
(72) Inventor: Manning, Serge, Plano, TX 75075 (US)
(74) Representative: Ryan, John Peter William

(57) **Abstract**

A system and method for mapping packet data functional entities to elements in a communication network is disclosed. The system allows the PPP/HDLC protocol to terminate in the packet data serving node (PDSN) element, and isolates the radio access network (RAN) element, which performs functions associated with the radio network, from the PDSN which performs functions associated with the data network. The system also includes a common link layer for coupling the RAN and the PDSN and provides communication through a common link layer identifier on a per wireless communication device basis.

## Description

### Background

This application relates generally to communication systems and, more particularly, to a system and method for mapping packet data functional entities to elements in a communication network.

There are many types of multiple-frequency mobile network technologies, including global systems for mobile ("GSM"), time division multiple access ("TDMA"), and advanced mobile phone service ("AMPS") in addition to common frequency technologies such as code division multiple access ("CDMA"). Likewise, there are many types of packet data technology that are being implemented with these mobile network technologies. For example, global packet radio services ("GPRS") and enhanced data rate for GSM evolution ("EDGE") technologies are being developed to implement packet data technology for GSM and TDMA networks, respectively. These packet data technologies often interface with conventional networks, such as the Internet or the Public Switched Telephone Network (PSTN). These networks implement protocols that define data interaction on various levels, or layers of operation.

Wireless communication networks, such as those described above, include functional entities for performing various actions. Functional entities represent a set of services for establishing and serving links between different elements in a communication network. Certain services commonly available include Mobile internet protocol (IP) and Simple IP. Mobile IP services are provided via a constant IP address that is maintained as a mobile station (potentially with a computer) moves through the communication network. Alternatively, Simple IP services are provided to the mobile station via a temporary IP address for a single session Typically, a Packet Data Serving Node (PDSN) processes Mobile IP registration messages and establishes a mobile IP tunnel between a radio access network (RAN) of the wireless communication network and the data network (e.g., the Internet).

For protocols other than IP, a mobile station may communicate by using Protocol Data Units (PDUs). PDUs are not easily routed over the Internet infrastructure but can, however, be transmitted over the Internet by being encapsulated within IP Alternatively, a secure tunnel between a current point of attachment for the mobile station and a enterprise network may be desired for remote access. Mobile IP requires the creation of a tunnel so that the network can transmit IP packets to a care-of address for the mobile station. A conventional method for mapping functional entities to the RAN and PDSN is disclosed in contribution TR45.6/98.10.20.22. This conventional method maps functional entities to the RAN and PDSN in a specific manner. The RAN encompasses all access specific and air interface technology dependent functional entities while the PDSN, on the other hand, only consists of resources of the IP network. The PDSN is therefore unaware of the resources of the RAN.

In this approach, a Point-to-Point Protocol (PPP) / High-Level Data Link Control (HDLC) link layer is terminated in the RAN which performs the functions associated with the radio subnetwork. These functions include: monitoring the reachability status of the mobile station, buffering any data during periods when the mobile station is not reachable, and mapping the International Mobile Subscriber Identity (IMSI) and Connection Reference (CR) values to an air interface PPP/HDLC connection. The IMSI and CR values are identifiers that are used to differentiate between the simultaneous reception of voice and data.

In addition, the RAN maps IMSI/CR values to a link layer identifier between the RAN and PDSN, and implements and terminates the PPP protocol from the mobile. For Mobile IP services, the RAN need not implement the IP Control Protocol (IPCP), which is part of the PPP and is responsible for assigning IP addresses, or the Challenge Authentication Protocol (CHAP), which uses a challenge and response "pair" to authenticate the mobile. For Simple IP services, however, these protocols may be needed. Further, the RAN forwards all layer 3 packets between the PDSN and the mobile.

Prior art approaches such as these have a number of limitations. One such limitation is the inconsistency found between Mobile IP and Simple IP. For example, the PDSN assigning IP addresses to the mobile station requires a mechanism such as a Dynamic Host Configuration Protocol (DHCP) client to be activated between the PDSN and the mobile station for Simple IP service. However, DHCP is inherently supported for Mobile IP service using a Mobile IP registration at the PDSN. Additionally, authenticating the mobile station at the PDSN is difficult to do for Simple IP service because there is no PDSN authentication procedure, while such authentication is inherently supported for Mobile IP service (using a Mobile IP registration at the PDSN).

Further, to allow the collection of accounting information for Simple IP service would require an accounting client (which is a type of AAA protocol such as a RADIUS client) in the RAN because of no authentication capability at the PDSN. For Mobile IP service, however, accounting information is collected at the PDSN which acts as a AAA client. Further still, for the mobile station to "attach" (connect) and "detach" (drop) itself from the PDSN for Simple IP service, the DHCP must be implemented between the PDSN and the mobile station. For Mobile IP service, however, the Mobile IP registration procedure is used at the PDSN.

Another prior art limitation regards the fact that the PPP/HDLC link layer is implemented in the RAN. Furthermore, the RAN must maintain and manage a pool of IP addresses and assign them to mobiles using Simple IP service. As such, it is difficult to make the RAN unaware of data specific protocols.

The prior art actions of adding login/password capabilities, collecting account information at the RAN, having the RAN act as a AAA client, and implementing the PPP protocol at the RAN increase the operation and design complexity of the mobile station, RAN, and PDSN.

Therefore, an improved system and method for mapping packet data functional entities to elements in a communication network is desired to reduce or eliminate these limitations and design complexities.

### Summary

In response to these and other limitations, provided herein is a unique system and method for mapping packet data functional entities to elements in a communication network. In one embodiment, the system allows the PPP/HDLC protocol to terminate in the PDSN element. This isolates the RAN element from the PDSN, and provides communication through a common link layer identifier. As a result, the RAN is coupled to the PDSN on a per mobile station basis.

In some embodiments, the system forwards all layer 2 data between the PDSN and the wireless communication device through the RAN. The RAN may also perform functions associated with a radio network that require no data specific protocols.

In some embodiments, the PDSN also performs functions associated with a data network, including user authentication and IP address assignment, regardless of the type of service utilized.

In some embodiments, the communication is provided through the common link layer identifier by mapping an international mobile subscriber identifier (IMSI) and a connection reference (CR) to an air interface channel through the RAN. The RAN is also used for mapping the IMSI and the CR to the common link layer identifier. Furthermore, the PDSN is used for mapping a network access identifier (NAI) of a user and an internet protocol (IP) address to the common link layer identifier, regardless of the type of service utilized.

In some embodiments, the common link layer is maintained by coupling between the RAN and the PDSN when the wireless communication device is in a dormant state.

These advantages, as well as others which will become apparent, are described in greater detail with respect to the drawings and the following disclosure.

### Brief Description of the Drawings

Fig. 1 is a diagrammatic view of a system of the present invention

Fig. 2 is a prior art diagrammatic view of mobile station, RAN, and PDSN protocol stacks.

Fig. 3 is a diagrammatic view of mobile station, RAN, and PDSN protocol stacks of the present invention.

Fig. 4 is a diagrammatic view of a computer and memory of the present invention.

Fig. 5 is a flow chart of a method for protocol mapping of the present invention.

### Detailed Description

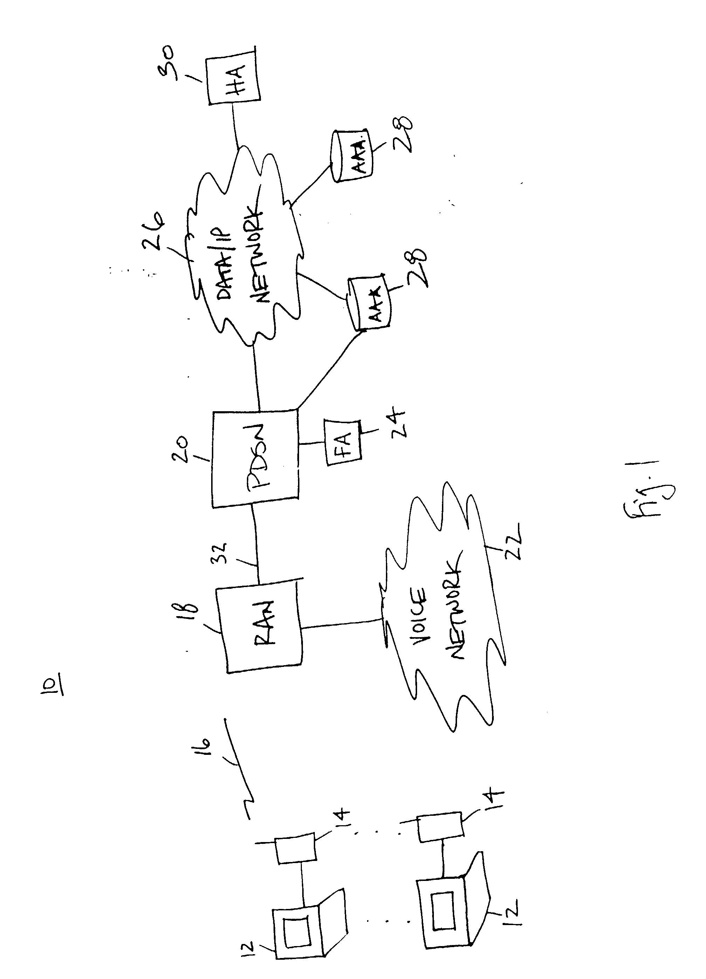

Fig. 1 depicts a communication network system 10 for implementing one embodiment of the present invention. The system 10 includes a plurality of computers 12 coupled to a plurality of mobile stations, or simply mobiles 14. The computers 12 may be laptop computers and the mobiles 14 may be mobile telephones. It is understood that the following disclosure provides many different embodiments, or examples, for implementing different features. Techniques and requirements that are only specific to certain embodiments should not be imported into other embodiments. Also, specific examples of networks, components, and messages are described below to simplify the present disclosure. These are, of course, merely examples and are not intended to limit the invention from that described in the claims.

The mobiles 14 communicate with a Radio Access Network (RAN) 18 via an air interface 16 In the present example, the air interface 16 utilizes Code Division Multiple Access (CDMA) to transfer messages between the mobiles 14 and the RAN 18 via certain radio frequency (air interface) channels. It is understood that air interfaces are well known to those of ordinary skill in the art.

In the present embodiment, the RAN 18 includes a base transceiver station, a base station controller, a mobile switching station, and may also include other necessary elements such as a home location register, a visitor location register, and communication nodes (such as those described in interim standard IS-41). The mobile switching station (not shown) of the RAN 18 is coupled to a voice network 22. The voice network 22 includes the Public Switch Telephone Network (PSTN, not shown) which includes the necessary hardware and software, such as DMS-MTX, DMS-250, or DMS-500 switches manufactured by Nortel Networks Corporation, to direct calls placed and received from voice terminals, such as telephones, and/or from data terminals, such as computers.

The PSTN may also accommodate wireless calls from the plurality of mobiles 14 via the voice network 22. The description of the voice network 22, including the PSTN and the switches, has been greatly simplified because these elements are well known to those of ordinary skill in the art.

The RAN 18 is coupled to a Packet Data Serving Node (PDSN) 20 via a common link layer 32 (also known as an R-P interface). The PDSN 20 is involved solely with packet data functions and is considered to be a part of a data/Internet Protocol (IP) packet network 26. The PDSN 20 acts as a Foreign Agent (FA) 24 which may be a router on a mobile's visited network that provides routing services while the mobile is registered with the system 10. The mobile 14 may be thought of as a host that changes its point of attachment from one network to another.

The common link layer 32 maintains the coupling between the RAN 18 and the PDSN 20 when the mobile (that has packet data service) is in an active or dormant state. The common link layer 32 may also provide a link layer connection (for transporting link layer information instead of only IP packets) that is supported within various networks such as IP, ATM, and Frame Relay.

Certain services are available via the system 10 including Mobile IP and Simple IP. Mobile IP services are provided via a constant IP address that is maintained as a mobile 14 and computer 12 move through the system Simple IP services are provided via a temporary IP address for a single session. The PDSN 20 performs FA 24 functions for Mobile IP services. Such functions include processing Mobile IP registration messages and terminating the mobile IP tunnel (tunnels are needed for a variety of reasons in the Internet.

The PDSN 20 may also act as an Authentication, Authorization, and Accounting (AAA) 28 client to authenticate the mobile 14 and collect accounting information (such as for billing).

The PDSN 20 is coupled to a data/IP network 26 that provides data services via components such as edge and backbone routers, servers hosting different services (e.g. email and Web services), and data terminals. An example of a data/IP network is the global internet. In such a network, all components communicate using IP. A plurality of physical media and link layer protocols may be used to support IP in these types of networks. The various components and protocols of a data/IP network are represented by various standards (such as the Internet Engineering Task Force (IETF)), are known to those of average skill in the art and have been greatly simplified.

The PDSN 20 and a Home Agent (HA) 30 communicate via the data/IP network 26. The HA 30 maintains a user's account and registration information and may tunnel user data to the PDSN 20 (and vice versa). The HA 30 may be thought of as a router on the mobile's 14 home network that maintains current location information for the mobile 14.

It is understood that the RAN 18, PDSN 20, FA 24, AAA 28 and HA30 have been discussed by various standards, such as the IETF, the International Telecommunications Union (ITU) for International Mobile Telecommunications 2000 (IMT-2000) and the Telecommunications Industry Association (TIA) Standards Subcommittee TR45.6.

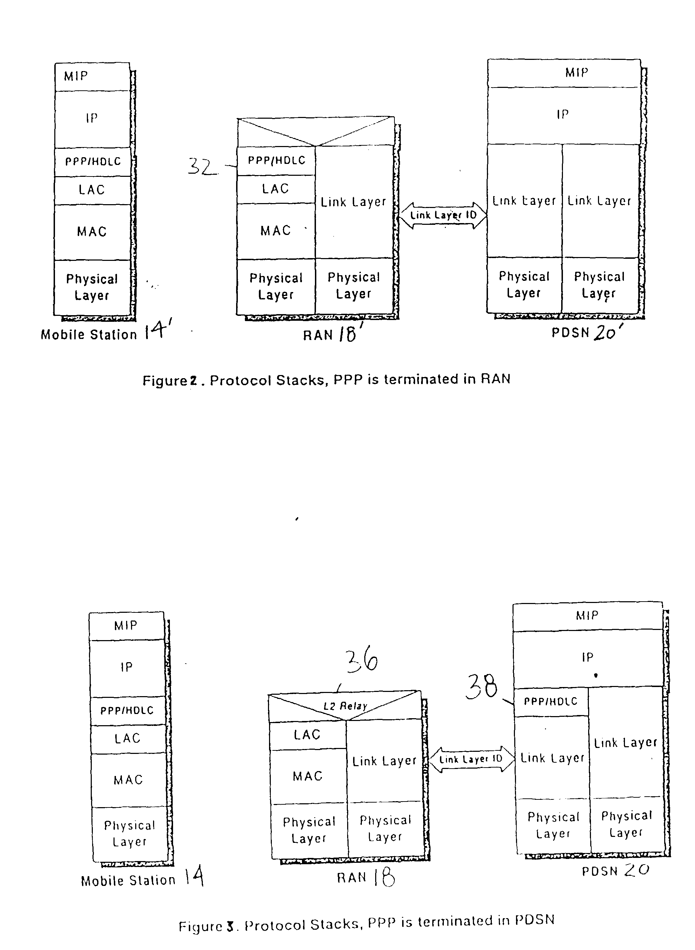

It is desired to map packet data (such as third generation, or "3G") functional entities to the radio access network RAN 18 and to the PDSN 20 network elements. Referring now to Fig. 2, a prior art diagrammatic view of protocol stacks for a mobile station, a RAN, and a PDSN is designated with the reference numeral 31. These components are different from the components used in Fig. 1, and are therefore designated as mobile station 14', RAN 18', and PDSN 20'. The protocol stacks for the RAN 18' include a PPP/HDLC link layer 32 termination. The RAN 18' assigns an IP address to the mobile station utilizing Simple IP services. As discussed in the Background section of the present disclosure, this protocol stack suffers certain problems and limitations.

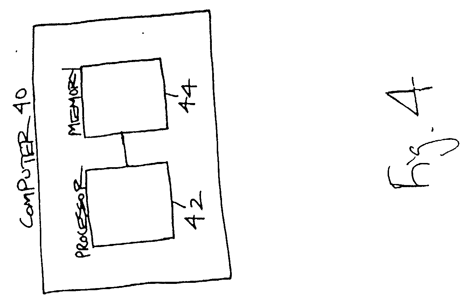

Referring now to Fig. 3, the mobile station 14, RAN 18 and the PDSN 20 of the present invention use an improved protocol stack 35. The RAN 18 only performs the functions associated with the radio subnetwork. These functions include managing all air interface resources (such as RF channels), monitoring the reachability status of the mobile (i.e. whether the mobile is active or dormant), buffering any data during periods when the mobile is not reachable, and mapping the IMSI and CR values to a link layer identifier between the RAN 18 and the PDSN 20. The IMSI and CR values are identifiers that are used to differentiate between the simultaneous reception of voice and data to an air interface channel (not to a PPP/HDLC connection as with the prior art). The RAN 18 relays 36 (or forwards) all layer 2 data between the PDSN 20 and the mobile station 14 (as opposed to the prior art which relays all IP layer 3 packets).

The PDSN 20 only performs functions associated with the IP/data network. For example, it implements and terminates the PPP/HDLC protocol 38 from the mobile station 14. In the prior art, the PPP/HDLC protocol was implemented and terminated in the RAN 18' (Fig. 2). As such, the RAN 18' was required to make IP addresses available to the computer 12 which is not an action the RAN is designed to do. This introduces additional complexities to the prior art design because the RAN 18' must perform functions associated with a data network.

The PDSN 20 also handles user authentication for both Simple IP and Mobile IP services, and IP address assignment using CHAP and IPCP for Simple IP service and the Mobile IP registration process for Mobile IP service. The PDSN 20 also performs the FA functions for Mobile IP service.

Regardless of the type of service, the PDSN maps the NAI to the IP address on the packet network side 26, as well as mapping NAI/IP to a link layer ID between the PDSN 20 and the RAN 18. Additionally, the PDSN 20 acts as a AAA client to authenticate the mobile station 14 and collect accounting information.

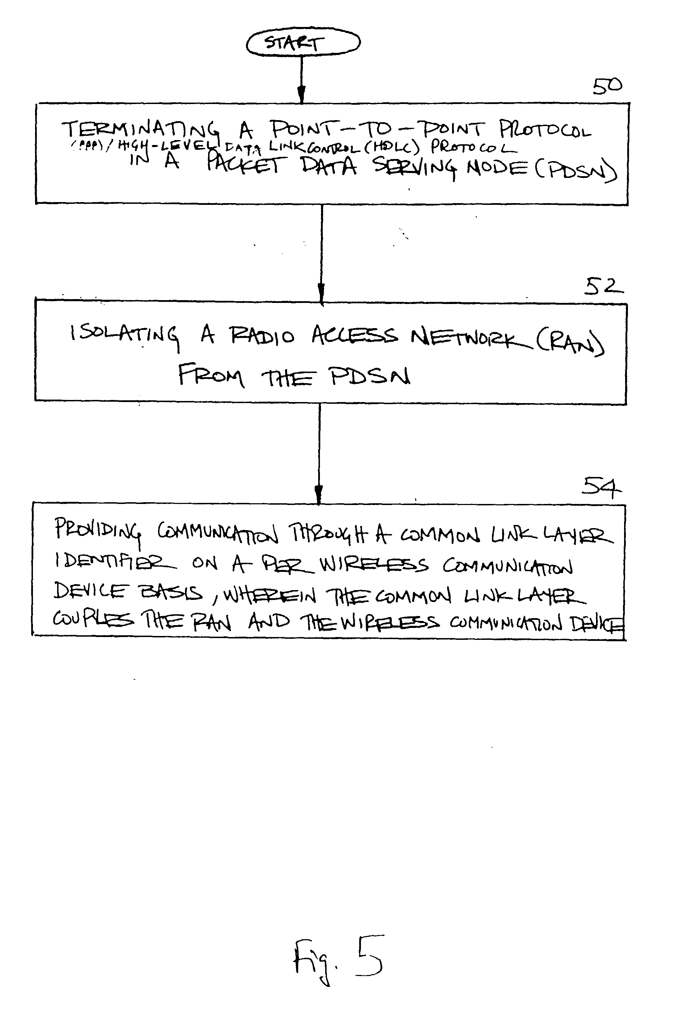

Referring now to Fig 4, a computer 40 including a processor 42 and memory 44 may be utilized by the present embodiment. The computer 40 may be a personal computer or laptop 12, the mobile terminal 14, the RAN 18, the PDSN 20, and/or any device that can send and receive data/IP information. Alternatively, the computer 40 may be representative of several different elements in the communication network system 10. The processor 42 may be a central processing unit, digital signal processor, microprocessor, microcontroller, microcomputer, and/or any device that manipulates digital information based on programming instructions. The memory 44 may be read-only memory, random access memory, flash memory and/or any device that stores digital information. The memory 44 is coupled to the processor 42 and stores programming instructions that, when read by the processor, cause the processor to perform certain processing operations.

Referring now to Fig. 5, a method for protocol mapping may be implemented by the computer 40 of Fig. 4. The method begins at step 50 where a PPP/HDLC protocol is terminated in the PDSN. At step 52, the RAN is isolated from the PDSN. The method proceeds to step 54 where communication is provided through a common link layer identifier on a per mobile basis, where the common link layer couples the RAN and the PDSN.

The present invention thus enjoys several advantages. For example, the prior art actions of adding login/password capabilities, collecting account information at the RAN, having the RAN act as a AAA client, and implementing the PPP protocol at the RAN, are no longer necessary. As a result, the operation and design complexity of the mobile station, RAN, and PDSN is significantly reduced. The approach of the present disclosure also provides a consistent architecture for both Mobile IP and Simple IP based services.

It is understood that variations may be made in the foregoing without departing from the scope of the present invention For example, the system may include additional networks (such as a "multi-media" network), elements that provide radio and data services, and devices such as network appliances. Additionally, the functionality of the computer 12 and the mobile 14 may be combined, resulting in a single device. Further, a plurality of PDSNs 20 may be utilized in the communication network system 10. Still further, the PPP may only be used for Simple IP services and not for Mobile IP services to avoid employing IPCP and CHAP. As such, the PPP may be terminated at the PDSN for Simple IP service, while the HDLC protocol may be terminated at the PDSN (or no link framing at all) for Mobile IP service.

It is understood that other modifications, changes and substitutions are intended in the foregoing disclosure and in some instances some features of the disclosure will be employed without corresponding use of other features. The system allows the PPP/HDLC protocol to terminate in the packet data serving node (PDSN) element, and isolates the radio access network (RAN) element, which performs functions associated with the radio network, from the PDSN which performs functions associated with the data network. The system also includes a common link layer for coupling the RAN and the PDSN and provides communication through a common link layer identifier on a per wireless communication device basis.

## Claims

1. A method for protocol mapping in a communication network, the method comprising the steps of:
terminating a point-to-point protocol (PPP)/High-Level Data Link Control (HDLC) protocol in a packet data serving node (PDSN);
isolating a radio access network (RAN) from the PDSN; and
providing communication through a common link layer identifier on a per wireless communication device basis, wherein the common link layer couples the RAN and the PDSN.

2. The method of claim 1 further comprising the step of forwarding all layer 2 data between the PDSN and the wireless communication device by the RAN.

3. The method of claim 1 further comprising the step of performing, by the RAN, functions associated with a radio network, wherein the functions require no data specific protocols.

4. The method of claim 1 further comprising the step of performing, by the PDSN, functions associated with a data network, wherein the functions include user authentication and IP address assignment, regardless of the type of service utilized.

5. The method of claim 1, wherein the step of providing communication through the common link layer identifier, further comprises the steps of:
mapping, by the RAN, an international mobile subscriber identifier (IMSI) and a connection reference (CR) to all air interface channel,
mapping, by the RAN, the IMSI and the CR to the common link layer identifier, and
mapping, by the PDSN, a network identifier (NAI) of a user and an internet protocol (IP) address to the common link layer identifier, regardless of the type of service utilized.

6. The method of claim 1 further comprising the step of maintaining, by the common link layer, the coupling between the RAN and the PDSN when the wireless communication device is in a dormant state.

7. A system for protocol mapping in a communications network, the system comprising:
means for terminating a point-to-point protocol (PPP) )/High-Level Data Link Control (HDLC) protocol in a packet data serving node (PDSN);
means for isolating a radio access network (RAN) from the PDSN; and
means for providing communication through a common link layer identifier on a per wireless communication device basis, wherein the common link layer couples the RAN and the PDSN.

8. The system of claim 7 further comprising means for forwarding, by the RAN, all layer 2 data between the PDSN and the wireless communication device.

9. The system of claim 7 further comprising means for performing, by the RAN, functions associated with a radio network, wherein the functions require no data specific protocols.

10. The system of claim 7 further comprising means for performing, by the PDSN, functions associated with a data network, wherein the functions include user authentication and IP address assignment, regardless of the type of service utilized.

11. The system of claim 7, wherein the means for providing communication through the common link layer identifier, further comprises:
means for mapping, by the RAN, an international mobile subscriber identifier (IMSI) and a connection reference (CR) to an air interface channel;
means for mapping, by the RAN, the IMSI and the CR to the common link layer identifier; and
means for mapping, by the PDSN, a network identifier (NAI) of a user and an internet protocol (IP) address to the common link layer identifier, regardless of the type of service utilized.

12. The system of claim 7 further comprising the step of maintaining, by the common link layer, the coupling between the RAN and the PDSN when the wireless communication device is in a dormant state.

13. A communication system comprising:
a plurality of wireless communication devices;
a packet data serving node (PDSN);
a radio access network (RAN) that forwards layer 2 data between the PDSN and the plurality of wireless communication devices;
a data network coupled to the PDSN; and
a voice network coupled to the RAN.

14. The system of claim 13, wherein the plurality of wireless communication devices may be coupled to a plurality of computers.

15. The system of claim 13 wherein the PDSN terminates a point-to-point protocol (PPP) )/High-Level Data Link Control (HDLC) protocol and the RAN is isolated from the PDSN, the system further comprising:
means for providing communication through a common link layer identifier on a per wireless communication device basis, wherein the common link layer couples the RAN and the PDSN.

16. The system of claim 13 wherein the RAN forwards all the layer 2 data between the PDSN and the wireless communication device.

17. The system of claim 13 wherein the RAN performs functions associated with a radio network, the functions requiring no data specific protocols.

18. The system of claim 13 wherein the PDSN performs functions associated with a data network, the functions including user authentication and IP address assignment, regardless of the type of service utilized.

19. The system of claim 13, wherein the RAN maps an international mobile subscriber identifier (IMSI) and a connection reference (CR) to all air interface channel and maps the IMSI and the CR to the common link layer identifier; and
wherein the PDSN maps a network identifier (NAI) of a user and an internet protocol (IP) address to the common link layer identifier, regardless of the type of service utilized.

20. The system of claim 13 wherein the common link layer maintains the coupling between the RAN and the PDSN when the wireless communication device is in a dormant state.

21. A computer program for use in a communication network, comprising instructions for:
terminating a point-to-point protocol (PPP) )/High-Level Data Link Control (HDLC) protocol in a packet data serving node (PDSN);
isolating a radio access network (RAN) from the PDSN; and
providing communication through a common link layer identifier on a per wireless communication device basis, wherein the common link layer couples the RAN and the PDSN.

22. The computer program of claim 21 further comprising instructions for forwarding, via the RAN, all layer 2 data between the PDSN and the wireless communication device.

23. The computer program of claim 21 further comprising instructions for performing, via the RAN, functions associated with a radio network, wherein the functions require no data specific protocols.

24. The computer program of claim 21 further comprising instructions for performing, via the PDSN, functions associated with a data network, wherein the functions include user authentication and IP address assignment, regardless of the type of service utilized.

25. The computer program of claim 21 further comprising instructions for:
mapping, by the RAN, an international mobile subscriber identifier (IMSI) and a connection reference (CR) to an air interface channel;
mapping, by the RAN, the IMSI and the CR to the common link layer identifier; and
mapping, by the PDSN, a network identifier (NAI) of a user and an internet protocol (IP) address to the common link layer identifier, regardless of the type of service utilized.

26. The computer program of claim 21 further comprising instructions for maintaining, by the common link layer, the coupling between the RAN and the PDSN when the wireless communication device is in a dormant state.
